(19) Europäisches Patentamt

European Patent Office

Office européen des brevets

(11) Veröffentlichungsnummer: **0 318 747 B1**

# (12) EUROPÄISCHE PATENTSCHRIFT

(45) Veröffentlichungstag der Patentschrift: **04.03.92**

(51) Int. Cl.5: **B25B 27/30**

(21) Anmeldenummer: **88118908.8**

(22) Anmeldetag: **12.11.88**

(54) **Werkzeug zum Ein- und Aushängen von Bremsfedern in Radnaben von Nutzfahrzeugen.**

(30) Priorität: **28.11.87 DE 3740465**

(43) Veröffentlichungstag der Anmeldung:
**07.06.89 Patentblatt  89/23**

(45) Bekanntmachung des Hinweises auf die
Patenterteilung:
**04.03.92 Patentblatt  92/10**

(84) Benannte Vertragsstaaten:
**AT BE CH DE ES FR GB IT LI NL SE**

(56) Entgegenhaltungen:
**DE-U- 1 780 198**
**FR-A- 764 759**
**US-A- 1 593 850**
**US-A- 4 066 242**
**US-A- 4 276 684**

(73) Patentinhaber: **MAN Nutzfahrzeuge Aktiengesellschaft**
**Dachauer Strasse 667 Postfach 50 06 20**
**W-8000 München 50(DE)**

(72) Erfinder: **Vesely, Ivan**
**Ignaz-Günther-Strasse 13**
**W-8150 Holzkirchen(DE)**
Erfinder: **Kreitmair, Xaver**
**Münchner Strasse 50**
**W-8060 Dachau(DE)**

Rank Xerox (UK) Business Services

**Beschreibung**

Die Erfindung trifft ein Werkzeug zum Ein- und Aushängen von Bremsfedern in Radnaben von Nutzfahrzeugen, als ein- oder zweiarmiger Hebel einsetzbar und mit einer daran als Winkelhebel angeordneten Zugstange.

Aufgrund der beengten und damit ungünstigen Einbauverhältnisse in der Radnabe von Rädern an Nutzfahrzeugen und der enormen Federkraft der die Bremsbeläge haltenden Federn stellt die Bremsfedermontage und -demontage in den meisten Fällen ein großes Problem dar, wobei für unterschiedliche Radgrößen unterschiedlicher Fahrzeugtypen und -fabrikate eine Vielzahl von Montagemitteln, wie Zange, Haken und Hebel zur Anwendung kommen. Oft ist das Aus- und Einhängen der Bremsfedern nicht ohne Abschrauben der Nabe möglich, um einen Angriffspunkt zum Aushängen der Federn mit herkömmlichen Werkzeugen zu finden. Das bedeutet für ein Rad eine zusätzliche Demontagezeit von ca. 1 1/2 Stunden, was bei Bremsbelagerneuerung eines Fahrzeugs im günstigsten Fall (4 Räder) 6 Stunden Montagezeit ausmacht. Es fallen zum einen Montagekosten an, zum anderen ist die Ausfallzeit des Nutzfahrzeuges in Ansatz zu bringen.

Es ist ein Werkzeug zum Ein- und Aushängen von Federn in Kraftfahrzeugen nach der US 4.276.684 bekannt, das bedarfsweise als einarmiger oder zweiarmiger Hebel mit unterschiedlichen Drehpunkten und/oder unterschiedlichen Lastangriffspunkten wirksam einsetzbar ist. Es ist ein weiteres Werkzeug mit als Winkelhebel ausgebildeter Zugstange bekannt (DE-U-17 80 198).

Der Erfindung liegt die Aufgabe zugrunde, ein gattungsgemäßes Universalwerkzeug für die Verwendung bei einer Vielzahl von Lastkraftwagen, Anhängern und Omnibussen zu schaffen, das leicht handhabbar und wirtschaftlich ist.

Dies wird dadurch erreicht, daß das Werkzeug schmal ausgebildet ist und aus einem sich in der Lastangriffszone verjüngenden Hebel mit hakenförmigem Ende, mindestens zwei daran gelagerten um mindestens 90° schwenkbaren Zugstangen unterschiedlicher Länge, einem in etwa parallel zum Hakenprofil im Abstand dazu angeordneten Nocken und einem am kraftarmseitigen Ende des Hebels, quer zu demselben angeordneten Handgriff besteht. Solcherart wird es möglich, eine Vielzahl von Werkzeugen durch ein Universalwerkzeug zum Ein- und Aushängen der Bremsfedern zu ersetzen und sich gleichzeitig den günstigsten Hebelansatz im Hinblick auf das Montageraumangebot und auf den nötigen Kraftaufwand unter einer Vielzahl von Hebelvarianten an einem einzigen Werkzeug auszusuchen. Bei einer größeren Anzahl von Werkzeugen für einen Verwendungszweck besteht auch eine größere Gefahr, daß ein Werkzeug abhanden kommt, zumeist das, was gerade gebraucht wird. Einem einzigen Universalwerkzeug wird dagegen ein größeres Augenmerk bezüglich seiner Aufbewahrung zuteil. Infolge der schmalgliedrigen Konzeption des Werkzeuges mit seinen langen Hebelarmen ist es vermeidbar, die Radnabe bei der Demontage und Montage der Federn zu entfernen, wodurch rund ein Tag Montageaufwand gespart wird, was sich einerseits auf einen günstigeren Reparaturpreis und andererseits auf eine geringere Ausfallzeit des Nutzfahrzeuges auswirkt.

Durch die Anordnung des quer zum Hebel verlaufenden Angriffes wird erreicht, daß die zum präzisen Ein- und Aushängen der Bremsfedern erforderlichen Seitenmanipulationen ohne Probleme mit wenig Kraftaufwand durchgeführt werden können.

Nach einem weiteren Merkmal der Erfindung sind die Zugstangen in unterschiedlichen Ebenen in Längserstreckung des Hebels angebracht. Auf diese Weise wird noch eine weitere Erhöhung der Anzahl der Hebelvarianten und damit der Anwendungsbereiche erzielt.

Der Gegenstand der Erfindung wird vorteilhaft weitergebildet, indem die Zugstangen gekröpft sind und mit ihrem kurzen Arm am Hebel befestigt sind, während der lange Arm an seinem freien Ende hakenförmig ausgebildet ist. Solcherart baut das Werkzeug schmal, und bei Einsatz der Zugstangen können diese mit ihren hakenförmigen Enden gut die obere Federwindung greifen.

Nach einem anderen Merkmal der Erfindung sind die Zugstangen in den Hebel eingeschraubt. Auf diese Weise sind die Zugstangen einfach und billig mit dem Hebel verbunden und lassen sich von der Position in Längserstreckung des Hebels leicht in die Arbeitsposition, die das Werkzeug zu einem Winkelhebel macht, bringen.

Indem mehrere Gewindelöcher zum Einschrauben der Zugstangen am Hebel vorgesehen sind, lassen sich die Hebelverhältnisse ohne großen Zeitaufwand weiter variieren.

Die Erfindung ist noch dahingehend ausgestaltet, daß zur Arretierung der Zugstangen in ihrer ungenutzten, parallel zur Längserstreckung des Hebels sich erstreckenden Position, ein Gummiring vorgesehen ist. Solcherart werden die Zugstangen oder auch eine Zugstange, wenn sie unbenutzt sind (ist), am Hebel gehalten, ohne störend bei der Handhabung des Werkzeuges zu wirken. Der Gummiring kann ein handelsüblicher O-Ring sein, der fast kostenlos ist und fast überall zur Verfügung steht.

Weitere Vorteile und Merkmale der Erfindung sind den Ansprüchen, der Figurenbeschreibung und den Zeichnungen zu entnehmen.

Die Erfindung ist in einem Ausführungsbeispiel und mehreren Anwendungsbeispielen dargestellt.

Es zeigen:

| | |
|---|---|
| Figur 1 | eine Seitenansicht des Werkzeuges, |
| Figur 2 | eine Draufsicht des Werkzeuges, |
| Figuren 3-7 | Anwendungsbeispiele des Werkzeuges in der Perspektive. |

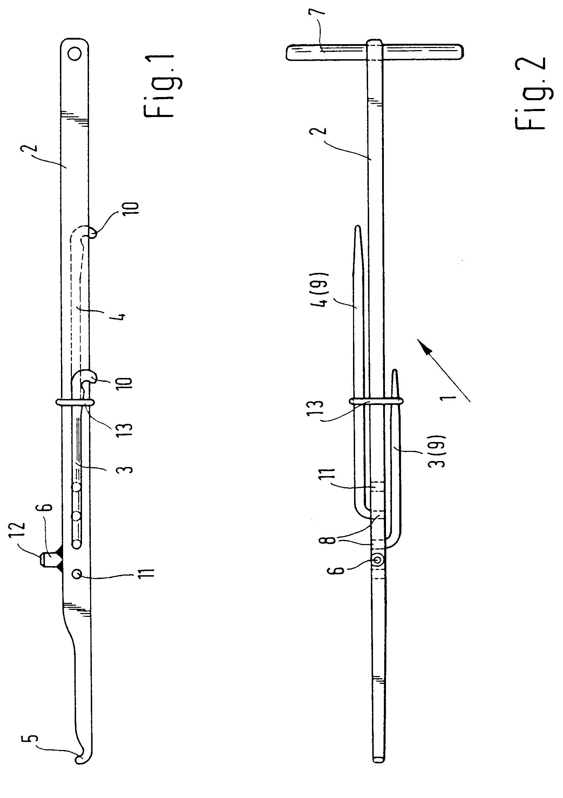

Das in Figur 1 und 2 gezeigte Universalwerkzeug 1 dient zum Ein- und Aushängen von Bremsfedern, die die Bremsbacken spannen. Es besteht aus einem Hebel 2, daran mit ihren kurzen Hebelarmen 8 in Gewindelöcher 11 eingeschraubten Zugstangen 3 und 4, die unterschiedliche Längen aufweisen, dem auf der Hochkantseite des Hebels 2 fest angebrachten Nocken 6, dem Handgriff 7 und einem die Zugstangen 3 und 4 und den Hebel 2 gemeinsam umgreifenden O-Ring 13. Der Hebel 2 ist an seinem lastarmseitigen Ende in zwei Dimensionen verjüngend ausgebildet und weist am Ende der Verjüngung den Haken 5 auf. Der Nocken 6 ist auf dem Rücken des Hebels 2 parallel zur Hakenkonfiguration und im Abstand dazu angeschweißt. Er ist vorzugsweise aus Rundstahl und weist an seinem freien Ende die Fase 12 auf. Die langen Arme 9 der Zugstangen 3 und 4 liegen im ungenutzten Zustand parallel zur Längserstreckung des Hebels 2 und sind mittels eines Befestigungselementes, z.B. eines O-Ringes, an diesen gehalten. Die langen Arme 9 weisen an ihren Enden Haken 10 auf und sind im Hakenbereich verjüngend abgeflacht. Indem eine Zugstange aus der Gummischlinge gelöst wird, entsteht in der Anwendung ein Winkelhebel, wenn sich z.B. das Ende des Hebels 2 an einer Innennabe abstützt und der Haken 10 die Bremsfeder greift. Beim Ausheben der Feder werden am Kraftangriffspunkt über den Handgriff 7 vom Monteur zwei Bewegungen vollzogen, nämlich eine vorziehende und eine seitlich ausrückende.

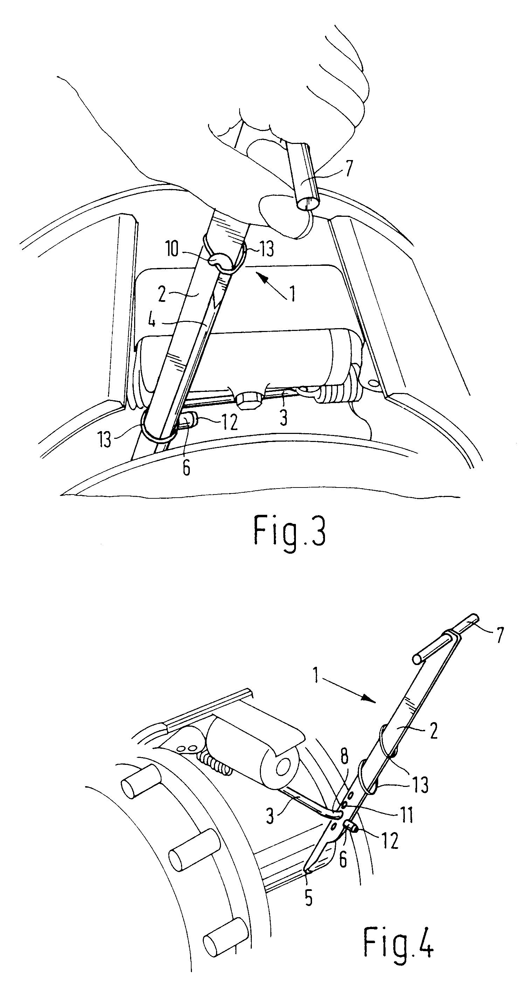

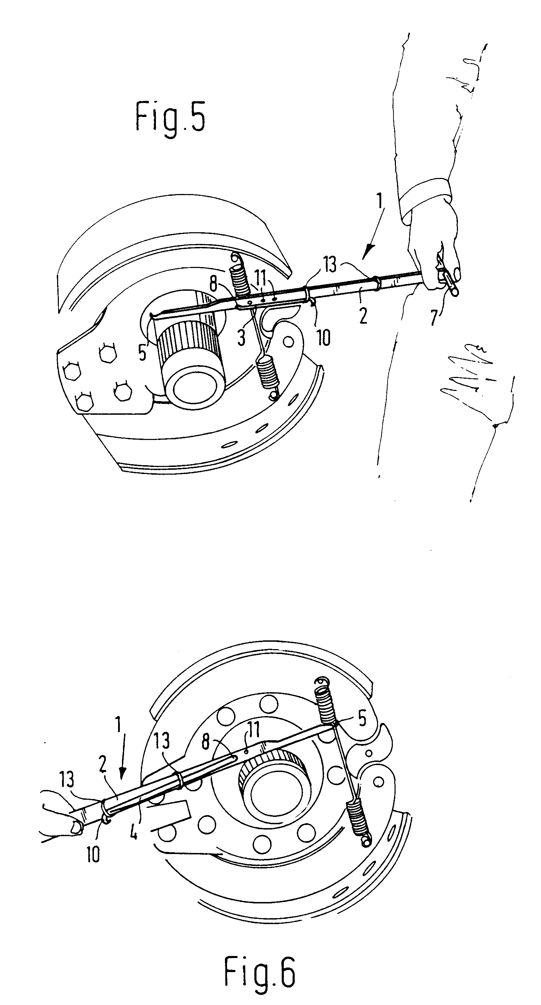

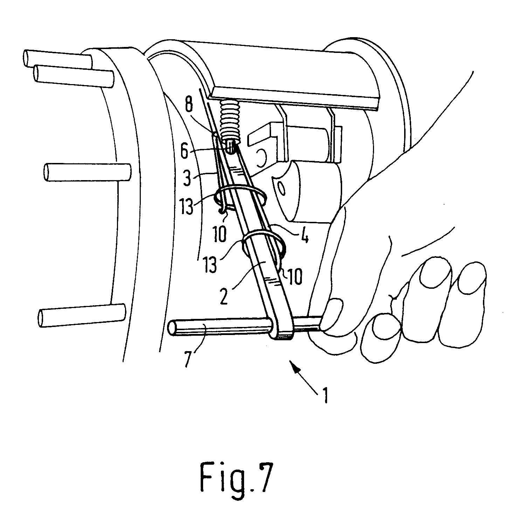

Zur Verdeutlichung der Erfindung und ihrer Anwendungsvorteile dienen die Figuren 3 - 7.

Figur 3 zeigt das Aushängen einer Bremsfeder im hinteren Bereich der Radnabe, wobei sehr deutlich die beengten Platzverhältnisse zu sehen sind. Als Hebeldrehpunkt liegt hier das hakenförmige Ende 5 des Hebels 2 am Außendurchmesser einer Innennabe an, während die kurze Zugstange 3, als Winkelhebel wirkend, mit ihrem Haken 10 die Bremsfeder greift. Diese wird nun über eine Zugbewegung mit kurzer Seitbeweggung vom am Handgriff 7 operierenden Monteur ausgehängt.

Figur 4 zeigt wiederum das Universalwerkzeug in seiner Anwendung am Winkelhebel, wobei sich das freie Ende des Hebels 2 an der Nabe abstützt und hier die lange Zugstange 4 zum Eingriff in die Bremsfeder zur Anwendung kommt.

Figur 5 zeigt die Anwendung des Universalwerkzeuges als einarmigen Hebel, wobei das freie Ende des Hebels 2 sich auf der Antriebsachse abstützt und der auf dem Rücken des Hebels 2 fest angebrachte Nocken 6 in die Bremsfeder eingreift, um diese auszuhängen.

In Figur 6 wirkt das Universalwerkzeug als zweiarmiger Hebel, der sich in seinem mittleren Bereich auf der Antriebsachse abstützt und mit seinem hakenförmigen Ende 5 in die Bremsfeder greift.

Figur 7 zeigt nochmals das Aushängen über Nocken 6, wobei auch die über O-Ringe 13 gehaltenen Zugstangen 3 und 4 zu sehen sind.

Bezugszeichenliste

| | |
|---|---|
| 1 | Werkzeug |
| 2 | Hebel |
| 3 | Zugstange |
| 4 | Zugstange |
| 5 | Hakenförmiges Ende von 2 |
| 6 | Nocken |
| 7 | Handgriff |
| 8 | Kurzer Arm von 3, 4 |
| 9 | Langer Arm von 3, 4 |
| 10 | Hakenförmiges Ende von 3, 4 |
| 11 | Gewindelöcher |
| 12 | Fase an 6 |
| 13 | Gummiring |

**Patentansprüche**

1. Werkzeug zum Ein- und Aushängen von Bremsfedern in Radnaben von Nutzfahrzeugen, als ein- oder zweiarmiger Hebel einsetzbar und mit einer daran als Winkelhebel angeordneten Zugstange, dadurch gekennzeichnet, daß das Werkzeug (1) schmal ausgebildet ist und aus einem sich in der Lastangriffszone verjüngenden Hebel (2) mit hakenförmigem Ende (5), mindestens zwei daran gelagerten, um mindestens 90° schwenkbaren Zugstangen (3, 4) unterschiedlicher Länge, einem in etwa parallel zum Hakenprofil (5) im Abstand dazu angeordneten Nocken (6) und einem am kraftarmseitigen Ende des Hebels, quer zu demselben angeordneten Handgriff (7) besteht.

2. Werkzeug nach Anspruch 1, dadurch gekennzeichnet, daß die Zugstangen (3, 4) in unterschiedlichen Ebenen in der Längserstreckung des Hebels (2) angebracht sind.

3. Werkzeug nach Anspruch 1 oder 2, dadurch gekennzeichnet, daß die Zugstangen (3, 4) gekröpft sind und mit ihrem kurzen Arm (8) am Hebel (2) befestigt sind, während der lange Arm (9) an seinem Ende hakenförmig (10) ausgebildet ist.

**4.** Werkzeug nach Anspruch 3, dadurch gekennzeichnet, daß die hakenförmige Zone (10) in ihrer Dickenerstreckung spitz zulaufend ausgebildet ist.

**5.** Werkzeug nach einem oder mehreren der Ansprüche 1 - 4, dadurch gekennzeichnet, daß die Zugstangen (3, 4) in dem Hebel (2) eingeschraubt sind.

**6.** Werkzeug nach einem oder mehreren der Ansprüche 1 - 5, dadurch gekennzeichnet, daß im unteren mittleren Bereich des Hebels (2) mehrere Gewindelöscher (11) zum wahlweisen Einschrauben der Zugstangen (3, 4) vorgesehen sind.

**7.** Werkzeug nach einem oder mehreren der Ansprüche 1 - 6, dadurch gekennzeichnet, daß der Nocken (6) als Rundbolzen, auf der Hochkantseite des Hebels (2) aufgeschweißt, ausgebildet ist und an seinem freien Ende eine Fase (12) aufweist.

**8.** Werkzeug nach einem oder mehreren der Ansprüche 1 - 7, dadurch gekennzeichnet, daß zur Arretierung der Zugstangen (3, 4) in ihrer unbenutzten, parallel zur Längserstreckung des Hebels (2) sich erstreckenden Position ein Gummiring (13) vorgesehen ist.

**9.** Werkzeug nach einem oder mehreren der Ansprüche 1 - 8, dadurch gekennzeichnet, daß der Hebel (2) und/oder die Zugstangen (3, 4) geschmiedet sind.

## Claims

**1.** A tool for coupling and uncoupling brake springs in wheel hubs of service vehicles, usable as a single-armed or two-armed lever and having a pull rod mounted thereon as an angled lever, characterized in that the tool (1) has a slender form and comprises a lever (2) tapering inwards in the load-application region and having a hook-shaped end (5), at least two pull rods (3, 4) of different lengths mounted thereon and pivotable through at least 90°, a stud (6) arranged substantially parallel to the hook profile (5) at a distance therefrom, and a handle (7) mounted on the power arm end of the lever and transversely thereto.

**2.** A tool according to Claim 1, characterized in that the pull rods (3, 4) are arranged in different planes in the longitudinal direction of the lever (2).

**3.** A tool according to Claim 1 or 2, characterized in that the pull rods (3, 4) are bent at right angles and are secured by their short arm (8) to the lever (2), while the long arm (9) is formed as a hook (10) at the end thereof.

**4.** A tool according to Claim 3, characterized in that the hook-shaped region (10) is made to converge at an acute angle in its transverse direction.

**5.** A tool according to one or more of Claims 1 to 4, characterized in that the pull rods (3, 4) are screwed into the lever (2).

**6.** A tool according to one or more of Claims 1 to 5, characterized in that a plurality of threaded holes (11) are provided in the lower central region of the lever (2) for optionally screwing in the pull rods (3, 4).

**7.** A tool according to one or more of Claims 1 to 6, characterized in that the stud (6) is constructed in the form of a round pin, welded onto the upper side edge of the lever (2), and is provided with a bevel (12) at its free end.

**8.** A tool according to one or more of Claims 1 to 7, characterized in that a rubber ring (13) is provided in order to lock the pull rods (3, 4) in their unused position which extends parallel to the longitudinal direction of the lever (2).

**9.** A tool according to one or more of Claims 1 to 8, characterized in that the lever (2) and/or the pull rods (3, 4) are forged.

## Revendications

**1.** Outil pour accrocher et décrocher les ressorts de freins sur les moyeux de roues de véhicules utilitaires, à utiliser comme levier à un ou deux bras et comportant une barre de traction disposée sur celui-ci comme levier coudé, outil caractérisé en ce que l'outil (1) est étroit dans sa conformation et est composé d'un levier (2) avec une extrémité (5) en forme de crochet, s'amincissant dans la zone d'application des charges, d'au moins deux barres de traction (3, 4) montées sur l'outil de longueurs différentes, pouvant pivoter d'au moins 90°, d'une saillie (6) disposée sensiblement parallèlement au profil du crochet (5) et à une certaine distance de lui et d'une poignée (7) placée à l'extrémité côté bras de puissance du levier, perpendiculairement à celui-ci.

**2.** Outil selon la revendication 1, caractérisé en ce que, les barres de traction (3, 4) sont placées dans des plans différents dans l'extension longitudinale du levier (2).

3.  Outil selon la revendication 1 ou la revendication 2, caractérisé en ce que les barres de traction (3, 4) sont coudées à angle droit et sont fixées au levier (2) par leur bras court (8), alors que le bras long (9) est réalisé à son extrémité en forme de crochet (10).

4.  Outil selon la revendication 3, caractérisé en ce que la réalisation de la zone (10) en forme de crochet dans son extension en épaisseur se termine en pointe.

5.  Outil selon l'une ou plusieurs des revendications 1-4, caractérisé en ce que les barres de traction (3, 4) sont fixées par vis sur le levier (2).

6.  Outil selon l'une ou plusieurs des revendications 1-5, caractérisé en ce que plusieurs trous filetés sont prévus dans la zone centrale inférieure du levier (2) pour visser au choix les barres de traction (3, 4).

7.  Outil selon l'une ou plusieurs des revendications 1-6, caractérisé en ce que la saillie (6) est constituée par une cheville ronde, soudée sur le côté de chant du levier (2) et présente un chanfrein (12) à son extrémité libre.

8.  Outil selon l'une ou plusieurs des revendications 1-7, caractérisé en ce qu'il est prévu un anneau de caoutchouc (13) pour bloquer les barres de traction (3, 4) dans leur position inutilisée s'étendant parallèlement à l'extension longitudinale du levier (2).

9.  Outil selon l'une ou plusieurs des revendications 1-8, caractérisé en ce que le levier (2) et/ou les barres de traction (3, 4) sont forgés.

Fig.1

Fig.2

Fig.3

Fig.4

Fig.5

Fig.6

Fig.7